(19) **Europäisches Patentamt**
**European Patent Office**
**Office européen des brevets**

(11) **EP 3 876 202 B1**

(12) **EUROPEAN PATENT SPECIFICATION**

(45) Date of publication and mention
of the grant of the patent:
**22.10.2025 Bulletin 2025/43**

(21) Application number: **19878571.9**

(22) Date of filing: **28.03.2019**

(51) International Patent Classification (IPC):
***G06T 7/80*** *(2017.01)* ***G01S 19/01*** *(2010.01)*
***H04N 17/00*** *(2006.01)*

(52) Cooperative Patent Classification (CPC):
**G06T 7/80;** G06T 2207/10032; H04N 17/002

(86) International application number:
**PCT/KR2019/003639**

(87) International publication number:
**WO 2020/091159 (07.05.2020 Gazette 2020/19)**

(54) **METHOD AND DEVICE FOR CORRECTING IMAGE SENSOR MISALIGNMENT BY USING SHIP IDENTIFICATION INFORMATION**

VERFAHREN UND VORRICHTUNG ZUR KORREKTUR VON BILDSENSORFEHLAUSRICHTUNGEN UNTER VERWENDUNG VON SCHIFFSIDENTIFIKATIONSINFORMATIONEN

PROCÉDÉ ET DISPOSITIF PERMETTANT DE CORRIGER UN DÉSALIGNEMENT DE CAPTEUR D'IMAGE À L'AIDE D'INFORMATIONS D'IDENTIFICATION DE NAVIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.11.2018 KR 20180133725**

(43) Date of publication of application:
**08.09.2021 Bulletin 2021/36**

(73) Proprietor: **Korea Aerospace Research Institute**
**Daejeon 34133 (KR)**

(72) Inventor: **LEE, Seon Ho**
**Yuseong-Gu, Daejeon 34020 (KR)**

(74) Representative: **Lavoix**
**Bayerstraße 83**
**80335 München (DE)**

(56) References cited:
**WO-A2-2014/121197 CN-A- 104 535 066**
**JP-A- 2015 036 832 KR-A- 20130 084 720**
**KR-A- 20140 016 509 KR-B1- 101 707 860**
**US-A1- 2008 240 616**

- **JINHAI CHEN ET AL: "Tracking a Vessel by Combining Video and AIS Reports", FUTURE GENERATION COMMUNICATION AND NETWORKING, 2008. FGCN '08. SECOND INTERNATIONAL CONFERENCE ON, IEEE, PISCATAWAY, NJ, USA, 13 December 2008 (2008-12-13), pages 374 - 378, XP031384047, ISBN: 978-0-7695-3431-2**
- **YAO LIBO ET AL: "A Novel Ship-Tracking Method for GF-4 Satellite Sequential Images", SENSORS, vol. 18, no. 7, 22 June 2018 (2018-06-22), pages 2007, XP055929229, DOI: 10.3390/s18072007**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a method and device for correcting image sensor misalignment that may support correction of mounting misalignment of an image sensor mounted on an artificial satellite based on ship identification information acquired from an automatic identification system (AIS).

BACKGROUND ART

JINHAI CHEN ET AL, "Tracking a Vessel by Combining Video and AIS Reports", FUTURE GENERATION COMMUNICATION AND NETWORKING, 2008. FGCN '08. SECOND INTERNATIONAL CONFERENCE ON, IEEE, PISCATAWAY, NJ, USA, (20081213), ISBN 978-0-7695-3431-2, pages 374 - 378, relates to a tracking of a vessel using a video camera and AIS signals.

YAO LIBO ET AL, "A Novel Ship-Tracking Method for GF-4 Satellite Sequential Images", SENSORS, (20180622), vol. 18, no. 7, doi:10.3390/s18072007, page 2007, relates to a dynamic correction using a RPC and AIS data of ships.

JP2015036832A relates to a data complementary device filtering abnormality and partial missing at manual inputting in AIS data by an operator, as assisting information for complementing abnormality or missing of AIS data. Then the data complementary device acquires AIS data at two points before and after imaging time of a satellite image, estimates position of a ship at the imaging time, decides maximum search distance, and calculates a score by using four references such as length, so that the ship on the satellite image and the AIS data are subjected to a mapping process. The data complementary device extracts correct data, and the AIS data having abnormality and partial missing and a ship image having no correspondence relation after the mapping process are subjected to mapping again, to complementing as abnormal data. By using attribute information of the ship image having no correspondence relation, complementing is performed as missing data.

CN104535066A concerns a marine target and electronic chart superposition method and a marine target and electronic chart superposition system in an onboard infrared video image. The method comprises the following steps: 1, acquiring and reading the on-board infrared video image; 2, segmenting a marine target in the on-board infrared video image, and positioning the marine target to acquire the position of the marine target relative to the ship; 3, calculating the corresponding geographical coordinates of the marine target according to the ship position of the ship, the real-time course of the ship, the orientation of an infrared thermal imager and the result of the step 2; 4, correcting the target position which corresponds to the marine target by utilizing corresponding AIS data; and 5, superposing the corrected marine target into an electronic chart so as to be displayed in a transparent mode.

An image sensor mounted on a satellite refers to equipment that generates an image by capturing a target on the ground.

Such an image sensor may deviate from a point and an angle at which the image sensor is initially installed due to its flow during a launch process of putting a satellite into an orbit or an orbital movement process in which the satellite moves along the orbit, which may lead to misalignment in a viewing direction.

In a related art, misalignment of an image sensor is corrected by capturing and recognizing a reference target on the ground.

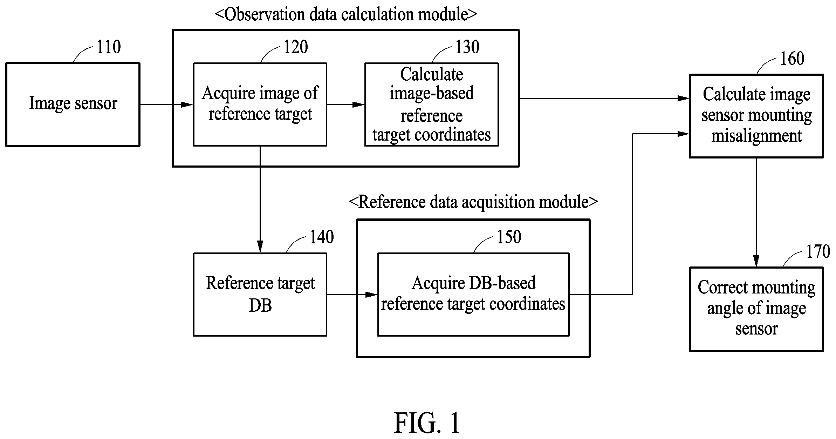

FIG. 1 is a diagram illustrating a misalignment correction procedure for an image sensor according to a related art.

In the related art, an observation data calculation module of a satellite acquires an image representing a ground reference target through an image sensor 110 in operation 120. For example, an image sensor mounted on an optical artificial satellite may capture a plurality of ground control points (GCPs) as ground reference targets, and an image sensor mounted on an artificial satellite with an image radar (for example, a synthetic aperture radar (SAR)) may capture a plurality of radar reflectors as ground reference targets.

Also, the observation data calculation module calculates reference target coordinates from the acquired image in operation 130.

A reference data acquisition module of the satellite acquires precise geographic coordinates corresponding to the reference target coordinates from a database (DB) 140.

Subsequently, a mounting misalignment value of the image sensor is calculated by applying the reference target coordinates and the precise geographic coordinates to a filter algorithm in operation 160. Here, the filter algorithm may include, for example, a least-square algorithm, a TRIAD algorithm, a QUEST algorithm, a Kalman filter algorithm, a batch filter algorithm, and the like.

Also, the satellite corrects a mounting angle of the image sensor using the calculated mounting misalignment value in operation 170, thereby completing correction of misalignment of the image sensor.

The above correction of misalignment of the image sensor according to the related art has a limitation with respect to reference targets installed on the existing ground. For example, due to only about "400" optical artificial satellites in Korea, accessibility is limited. In addition, since there are about "50" artificial satellites with image radars in other countries, and since a vast installation area is required due to characteristics of a radar reflector that is to be captured, accessibility is also limited.

In other words, the correction of the misalignment according to the related art has an issue of extremely increasing the installation and maintenance cost to establish more reference targets on the ground.

Therefore, there is a demand to overcome a limitation of reference targets on the ground using an automatic identification system (AIS).

## DISCLOSURE OF INVENTION

### TECHNICAL SUBJECT

Example embodiments of the present disclosure provide a method and device for correcting image sensor misalignment that may process correction of misalignment of an image sensor mounted on a satellite at relatively low cost using an automatic identification system (AIS) that continues to transmit a position of a ship.

Also, example embodiments of the present disclosure provide a method and device for correcting image sensor misalignment that may accurately calculate a mounting misalignment value of an image sensor using a position difference between image-based ship coordinates and AIS-based ship coordinates after performing time synchronization of the image-based ship coordinates and the AIS-based ship coordinates.

### TECHNICAL SOLUTION

According to an aspect of the present disclosure, there is provided a method of correcting image sensor misalignment according to claim 1. The dependent claims set out particular embodiments of the invention.

According to another aspect of the present disclosure, there is provided a device for correcting image sensor according to claim 4.. The dependent claims set out particular embodiments of the invention.

### EFFECT OF THE INVENTION

According to example embodiments of the present disclosure, a method and device for correcting image sensor misalignment that may process correction of misalignment of an image sensor mounted on a satellite at relatively low cost using an automatic identification system (AIS) that continues to transmit a position of a ship may be provided.

Also, according to example embodiments of the present disclosure, it is possible to accurately calculate a mounting misalignment value of an image sensor using a position difference between image-based ship coordinates and AIS-based ship coordinates after performing time synchronization of the image-based ship coordinates and the AIS-based ship coordinates.

Also, according to example embodiments of the present disclosure, it is possible to enhance a statistical precision of a mounting misalignment calculation algorithm because a sufficient number of reference targets may be secured.

Also, according to example embodiments of the present disclosure, it is possible to increase accessibility and reduce cost for installation and maintenance of reference targets by securing reference targets in a sea area.

## BRIEF DESCRIPTION OF DRAWINGS

FIG. 1 is a diagram illustrating a misalignment correction procedure for an image sensor according to a related art.

FIG. 2 is a block diagram illustrating an internal configuration of a device for correcting image sensor misalignment according to an example embodiment of the present disclosure.

FIGS. 3A and 3B are diagrams illustrating an example of calculating a difference angle $\theta$ based on calibration coordinates for a ship according to an example embodiment of the present disclosure.

FIG. 4 is a diagram illustrating a misalignment correction procedure for an image sensor according to an example embodiment of the present disclosure.

FIG. 5 is a flowchart illustrating a method of correcting image sensor misalignment according to an example embodiment of the present disclosure.

## BEST MODE FOR CARRYING OUT THE INVENTION

The terminology used herein is for the purpose of describing example embodiments only and is not to be limiting of the example embodiments. As used herein, the singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Unless otherwise defined herein, all terms used herein including technical or scientific terms have the same meaning as commonly understood by one of ordinary skill in the art to which example embodiments belong. It will be further understood that terms, such as those defined in commonly-used dictionaries, should be interpreted as having a meaning that is consistent with their meaning in the context of the relevant art and will not be interpreted in an idealized or overly formal sense unless expressly so defined herein.

When describing the example embodiments with reference to the accompanying drawings, like reference numerals refer to like constituent elements and a repeated description related thereto will be omitted. In the description of example embodiments, detailed description of well-known related structures or functions will be omitted when it is deemed that such description will cause ambiguous interpretation of the present disclosure.

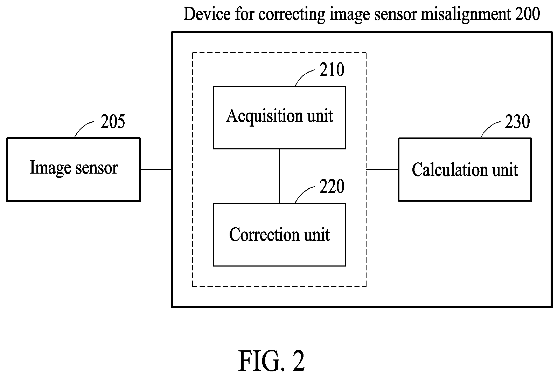

FIG. 2 is a block diagram illustrating an internal configuration of a device for correcting image sensor misalignment according to an example embodiment of the present disclosure.

Referring to FIG. 2, a device 200 for correcting image sensor misalignment according to an example embodiment may include an acquisition unit 210 and a correction unit 220. Depending on example embodiments, the device 200 may further include a calculation unit 230.

The acquisition unit 210 may acquire a ship image from an image sensor 205. In other words, the acquisition unit 210 may function to acquire a ship image that is generated by capturing a target ship in the image sensor 205 for capturing a target on the ground which is mounted on a satellite.

Also, the acquisition unit 210 may acquire ship identification information from an automatic identification system (AIS). The AIS may be a device for preventing a collision of a ship at sea by providing navigation information, such as a ship's position, course, and speed, in real time. The AIS may determine presence and progress of other ships even when it is impossible to recognize a nearby ship and may identify sharpness, course, and speed even when visibility is poor, to prevent a ship collision and to more effectively perform safety management such as avoidance of a ship collision, a control of a wide area, and search and rescue activities of ships in distress.

In other words, the acquisition unit 210 may specify a ship captured by the image sensor 205 and may acquire ship identification information transmitted by an AIS included in the ship.

The correction unit 220 may identify first coordinates of a ship calculated from the ship image and second coordinates of the ship calculated from the ship identification information. In other words, the correction unit 220 may check a position of a ship identified in the ship image and a position of a ship identified in the ship identification information, may identify the position of the ship identified in the ship image as the first coordinates and may identify the position of the ship identified in the ship identification information as the second coordinates.

The device 200 may perform time synchronization for the second coordinates based on the first coordinates. To this end, the device 200 may further include the calculation unit 230 to calculate an observation time involved in each of identification of the first coordinates and identification of the second coordinates.

The calculation unit 230 may calculate an observation time t and the first coordinates using the ship image, and may calculate an observation time $\tau$ and the second coordinates using the ship identification information. In other words, the calculation unit 230 may calculate the observation time t associated with a time in which the ship image is generated, and a ship position at the observation time t as the first coordinates, and may calculate the observation time $\tau$ associated with a time in which the ship identification information is generated, and a ship position at the observation time $\tau$ as the second coordinates.

Here, the time synchronization may refer to finely adjusting the first coordinates or the second coordinates on the premise that the ship image and the ship identification information are generated at the same time.

In the present disclosure, the second coordinates may be adjusted on the premise that the ship identification information is generated at a time in which the ship image is generated.

In other words, the calculation unit 230 may perform the time synchronization by moving the second coordinates by a time difference between the observation times t and $\tau$. For example, the calculation unit 230 may calculate calibration coordinates by applying the time difference to the second coordinates. The calculation unit 230 may calculate a position of a ship based on the calibration coordinates on the premise that the ship identification information is generated at the time in which the ship image is generated.

Subsequently, the correction unit 220 may determine a difference angle $\theta$ formed by the calibration coordinates calculated according to the time synchronization and the first coordinates as a misalignment value of the image sensor.

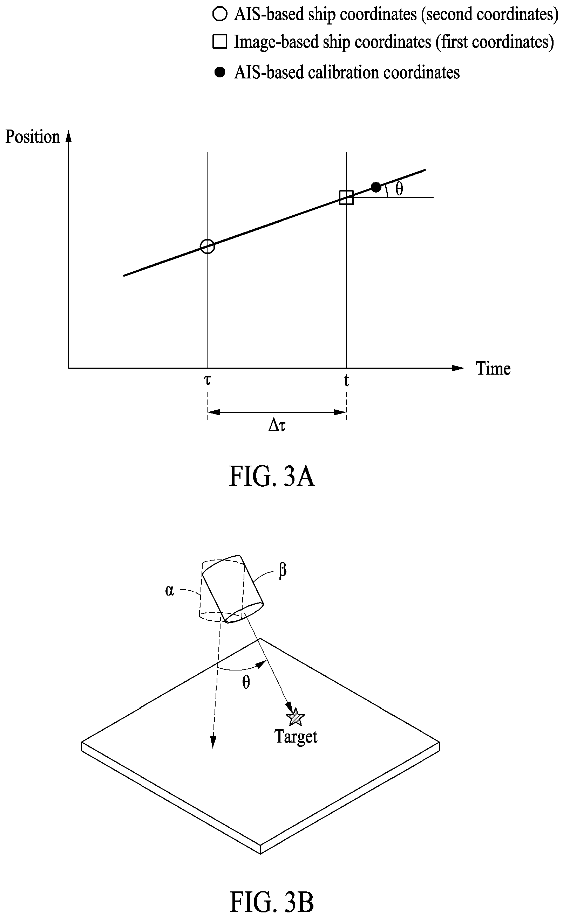

Calculation of the difference angle $\theta$ will be described below with reference to FIGS. 3A and 3B.

FIGS. 3A and 3B are diagrams illustrating an example of calculating a difference angle $\theta$ based on calibration coordinates for a ship according to an example embodiment of the present disclosure.

In FIG. 3A, $\square$ represents image-based ship coordinates (first coordinates), and $\circ$ represents AIS-based ship coordinates (second coordinates).

The calculation unit 230 may calculate image-based ship coordinates (first coordinates) and an observation time t in which the image-based ship coordinates (first coordinates) are observed, using a ship image associated with the image sensor. The calculated image-based ship coordinates (first coordinates) and the calculated observation time t are shown on a position-time plane of FIG. 3A.

Also, the calculation unit 230 may calculate AIS-based ship coordinates (second coordinates) and an observation time $\tau$ in which the AIS-based ship coordinates (second coordinates) are observed, using ship identification information associated with the AIS. The calculated ship coordinates (second coordinates) and the calculated observation time $\tau$ are also shown on the position-time plane.

In addition, the calculation unit 230 may perform time synchronization by moving the AIS-based ship coordinates (second coordinates) by a time difference $\Delta\tau$ between the observation times t and $\tau$, to calculate cali-

bration coordinates ●. The calculated calibration coordinates ● are shown on the position-time plane.

In a state in which the image-based ship coordinates (first coordinates) □, the AIS-based ship coordinates (second coordinates) ○, and the calibration coordinates ● are shown on the position-time plane, the correction unit 220 may identify a line of sight from a satellite to the image-based ship coordinates (first coordinates) □.

Also, the correction unit 220 may identify a line of sight from the satellite to the calibration coordinates ●.

The correction unit 220 may determine a difference between the identified line of sight to the first coordinates and the identified line of sight to the calibration coordinates as the difference angle θ.

Referring back to FIG. 1, the correction unit 220 may correct a misalignment value of the image sensor 205. In other words, the correction unit 220 may adjust a viewing direction of the image sensor 205 based on calibration coordinates calculated according to the time synchronization and may correct the misalignment value of the image sensor 205.

Referring to FIG. 3B, the correction unit 220 may correct the misalignment value by rearranging the image sensor 205 by the difference angle θ. In other words, the correction unit 220 may rearrange a position α of the misaligned image sensor 205 by rotation by the calculated difference angle θ to a position β, so that the viewing direction of the image sensor 205 may accurately point at a target.

According to an example embodiment of the present disclosure, a method and device for correcting image sensor misalignment that may process correction of misalignment of an image sensor mounted on a satellite at relatively low cost using an AIS that continues to transmit a position of a ship may be provided.

Also, according to example embodiments of the present disclosure, it is possible to accurately calculate a mounting misalignment value of an image sensor using a position difference between image-based ship coordinates and AIS-based ship coordinates after performing time synchronization of the image-based ship coordinates and the AIS-based ship coordinates.

Also, according to example embodiments of the present disclosure, it is possible to enhance a statistical precision of a mounting misalignment calculation algorithm because a sufficient number of reference targets may be secured.

Also, according to example embodiments of the present disclosure, it is possible to increase accessibility and reduce cost for installation and maintenance of reference targets by securing reference targets in a sea area.

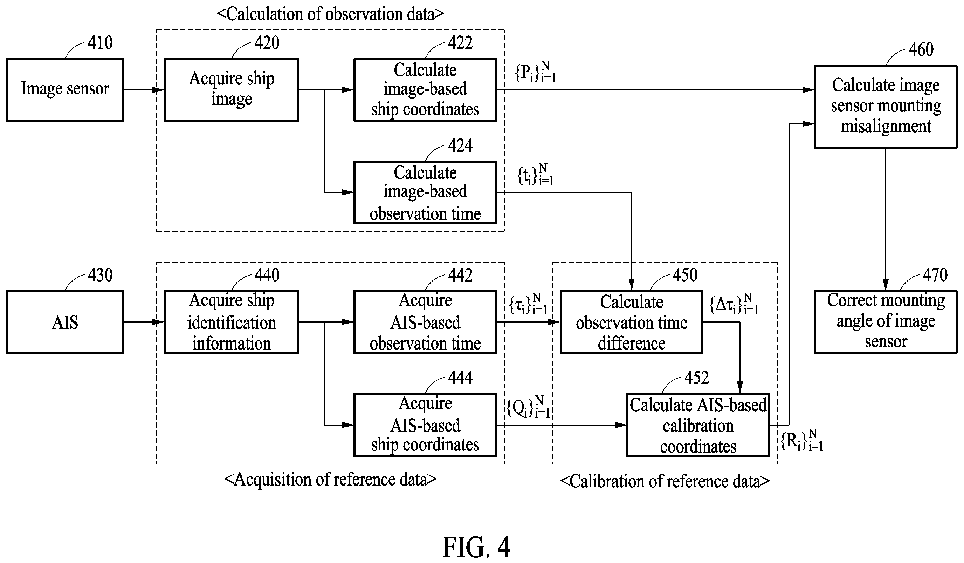

FIG. 4 is a diagram illustrating a misalignment correction procedure for an image sensor according to an example embodiment of the present disclosure.

In the misalignment correction procedure of the image sensor, the device 200 may acquire a ship image from an image sensor 410 in operation 420 as a step of calculating observation data. The device 200 may acquire a ship image typically once or several times.

Subsequently, the device 200 may calculate image-based ship coordinates $\{P_i\}^N_{i=1}$ from the acquired ship image in operation 422, and may also calculate an image-based observation time $\{t_i\}^N_{i=1}$ from the acquired ship image in operation 424. Here, N may indicate a number of ships, that is, a total number of ships observed at the same time by an image sensor and an AIS. Also, the image-based ship coordinates $\{Pi\}^N_{i=1}$ may be defined as ship coordinates calculated using geometry information of an image pixel. Also, the image-based observation time $\{t_i\}^N_{i=1}$ may be defined as an observation time of a ship calculated using time information of an image pixel.

The device 200 may acquire ship identification information from an AIS 430 in operation 440 as a step of acquiring reference data. The device 200 may periodically acquire ship identification information.

Subsequently, the device 200 may acquire an AIS-based observation time $\{\tau_i\}^N_{i=1}$ from the acquired ship identification information in operation 442, and may also acquire AIS-based ship coordinates $\{Q_i\}^N_{i=1}$ from the acquired ship identification information in operation 444. Here, the AIS-based ship coordinates $\{Q_i\}^N_{i=1}$ may be defined as ship coordinates acquired by the AIS, and the AIS-based observation time $\{\tau_i\}^N_{i=1}$ may be defined as an observation time of a ship acquired by the AIS.

Next, as a step of calibrating reference data, the device 200 may calculate an observation time difference $\{\Delta\tau_i\}^N_{i=1}$ based on a difference between the image-based observation time $\{t_i\}^N_{i=1}$ and the AIS-based observation time $\{\tau_i\}^N_{i=1}$ in operation 450.

$$\Delta\tau = t_i - \tau_i$$

for i = 1, ..., N

Also, the device 200 may propagate the AIS-based ship coordinates $\{Q_i\}^N_{i=1}$ by the observation time difference $\{\Delta\tau_i\}^N_{i=1}$ based on information, for example, information about a time, a position, a speed, and an orientation angle included in ship identification information, and may calculate AIS-based calibration coordinates $\{R_i\}^N_{i=1}$ in operation 452. Here, the AIS-based calibration coordinates $\{R_i\}^N_{i=1}$ may be calibration coordinates of a ship calculated through observation time difference calibration for AIS-based ship coordinates, and accordingly time synchronization of the AIS-based ship coordinates and image-based ship coordinates may be performed. In other words, the device 200 may perform time synchronization of the image-based ship coordinates $\{P_i\}^N_{i=1}$ and the image-based observation time $\{t_i\}^N_{i=1}$.

Subsequently, the device 200 may calculate image sensor mounting misalignment Δθ using the image-based ship coordinates $\{P_i\}^N_{i=1}$ and the AIS-based calibration coordinates $\{R_i\}^N_{i=1}$ in operation 460.

In operation 470, the device 200 may correct a mounting angle of the image sensor using the calculated image sensor mounting misalignment $\Delta\theta$.

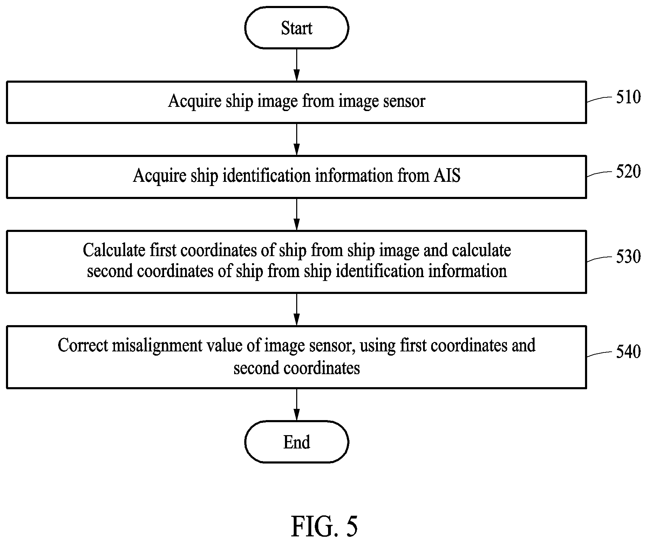

Hereinafter, a flow of operations of the device 200 according to example embodiments of the present disclosure will be described in detail with reference to FIG. 5.

FIG. 5 is a flowchart illustrating a method of correcting image sensor misalignment according to an example embodiment of the present disclosure.

The method of correcting image sensor misalignment according to an example embodiment may be performed by the above-described device 200.

In operation 510, the device 200 may acquire a ship image from an image sensor. Operation 510 may be a process of acquiring a ship image that is generated by capturing a target ship in an image sensor for capturing a target on the ground which is mounted on a satellite.

In operation 520, the device 200 may acquire ship identification information from an AIS. The AIS may be a device for preventing a collision of a ship at sea by providing navigation information, such as a ship's position, course, and speed, in real time. The AIS may determine presence and progress of other ships even when it is impossible to recognize a nearby ship and may identify sharpness, course, and speed even when visibility is poor, to prevent a ship collision and to more effectively perform safety management such as avoidance of a ship collision, a control of a wide area, and search and rescue activities of ships in distress.

Operation 520 may be a process of specifying a ship captured by an image sensor and acquiring ship identification information transmitted by an AIS included in the ship.

In operation 530, the device 200 may calculate first coordinates of a ship from the ship image and calculate second coordinates of the ship from the ship identification information. Operation 530 may be a process of checking a position of a ship identified in the ship image and a position of a ship identified in the ship identification information, identifying the position of the ship identified in the ship image as the first coordinates and identifying the position of the ship identified in the ship identification information as the second coordinates.

In operation 540, the device 200 may correct a misalignment value of the image sensor using the first coordinates and the second coordinates. Operation 540 may be a process of performing time synchronization for the second coordinates based on the first coordinates.

In the time synchronization, the device 200 may calculate an observation time t and the first coordinates using the ship image, and may calculate an observation time $\tau$ and the second coordinates using the ship identification information. In other words, the device 200 may calculate the observation time t associated with a time in which the ship image is generated, and a ship position at the observation time t as the first coordinates, and may calculate the observation time $\tau$ associated with a time in which the ship identification information is generated, and a ship position at the observation time $\tau$ as the second coordinates.

Here, the time synchronization may refer to finely adjusting the first coordinates or the second coordinates on the premise that the ship image and the ship identification information are generated at the same time.

In the present disclosure, the second coordinates may be adjusted on the premise that the ship identification information is generated at a time in which the ship image is generated.

In other words, the device 200 may perform the time synchronization by moving the second coordinates by a time difference between the observation times t and $\tau$. For example, the device 200 may calculate calibration coordinates by applying the time difference to the second coordinates. That is, the device 200 may calculate a position of a ship based on the calibration coordinates on the premise that the ship identification information is generated at the time in which the ship image is generated.

Subsequently, the device 200 may determine a difference angle $\theta$ formed by the calibration coordinates calculated according to the time synchronization and the first coordinates as a misalignment value of the image sensor.

For example, the device 200 may calculate image-based ship coordinates (first coordinates) and an observation time t in which the image-based ship coordinates (first coordinates) are observed, using a ship image associated with the image sensor. The calculated image-based ship coordinates (first coordinates) and the calculated observation time t are shown on the position-time plane of FIG. 3A.

Also, the device 200 may calculate AIS-based ship coordinates (second coordinates) and an observation time $\tau$ in which the AIS-based ship coordinates (second coordinates) are observed, using ship identification information associated with the AIS. The calculated ship coordinates (second coordinates) and the calculated observation time $\tau$ are also shown on the position-time plane.

In addition, the device 200 may perform time synchronization by moving the AIS-based ship coordinates (second coordinates) by a time difference $\Delta\tau$ between the observation times t and $\tau$, to calculate calibration coordinates. The calculated calibration coordinates are shown on the position-time plane.

In a state in which the image-based ship coordinates (first coordinates) $\square$, the AIS-based ship coordinates (second coordinates) $\circ$, and the calibration coordinates $\bullet$ are shown on the position-time plane, the device 200 may identify a line of sight from a satellite to the image-based ship coordinates (first coordinates) $\square$.

Also, the device 200 may identify a line of sight from the satellite to the calibration coordinates $\bullet$.

The device 200 may determine a difference between the identified line of sight to the first coordinates and the identified line of sight to the calibration coordinates as the difference angle $\theta$.

Also, the device 200 may correct a misalignment value of the image sensor. In other words, the device 200 may adjust a viewing direction of the image sensor 205 based on calibration coordinates calculated according to the time synchronization and may correct the misalignment value of the image sensor.

Referring to FIG. 3B, the device 200 may correct the misalignment value by rearranging the image sensor by the difference angle $\theta$. In other words, the device 200 may rearrange a position $\alpha$ of the misaligned image sensor by rotation by the calculated difference angle $\theta$ to a position $\beta$, so that the viewing direction of the image sensor may accurately point at a target.

According to example embodiments of the present disclosure, a method and device for correcting image sensor misalignment that may process correction of misalignment of an image sensor mounted on a satellite at relatively low cost using an AIS that continues to transmit a position of a ship may be provided.

Also, according to example embodiments of the present disclosure, it is possible to accurately calculate a mounting misalignment value of an image sensor using a position difference between image-based ship coordinates and AIS-based ship coordinates after performing time synchronization of the image-based ship coordinates and the AIS-based ship coordinates.

Also, according to example embodiments of the present disclosure, it is possible to enhance a statistical precision of a mounting misalignment calculation algorithm because a sufficient number of reference targets may be secured.

Also, according to example embodiments of the present disclosure, it is possible to increase accessibility and reduce cost for installation and maintenance of reference targets by securing reference targets in a sea area.

The method according to the above-described example embodiments may be recorded in non-transitory computer-readable media including program instructions to implement various operations which may be performed by a computer. The media may also include, alone or in combination with the program instructions, data files, data structures, and the like. The program instructions recorded on the media may be those specially designed and constructed for the purposes of the example embodiments, or they may be of the well-known kind and available to those having skill in the computer software arts. Examples of non-transitory computer-readable media include magnetic media such as hard disks, floppy disks, and magnetic tape; optical media such as CD ROM discs and DVDs; magneto-optical media such as optical discs; and hardware devices that are specially configured to store and perform program instructions, such as read-only memory (ROM), random access memory (RAM), flash memory, and the like. Examples of program instructions include both machine code, such as code produced by a compiler, and files containing higher level code that may be executed by the computer using an interpreter. The described hardware devices may be configured to act as one or more software modules in order to perform the operations of the above-described example embodiments, or vice versa.

The software may include a computer program, a piece of code, an instruction, or some combination thereof, to independently or collectively instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network coupled computer systems so that the software is stored and executed in a distributed fashion. The software and data may be stored by one or more non-transitory computer readable recording mediums.

## Claims

1. A method of correcting image sensor misalignment, wherein the image sensor is mounted on a satellite, the method comprising:

   acquiring (420, 510) a ship image from an image sensor (205);
   calculating (422) first coordinates of the ship using the ship image;
   acquiring (440, 520) ship identification information from an automatic identification system, AIS;
   calculating (444) second coordinates of the ship using the ship identification information;
   performing time synchronization for the second coordinates based on the first coordinates;
   correcting (460, 540) a misalignment value of the image sensor (205) using the first coordinates of the ship calculated from the ship image and the second coordinates of the ship calculated from the ship identification information; and
   determining a difference angle $\theta$ formed by calibration coordinates calculated according to the time synchronization and the first coordinates as a misalignment value of the image sensor, wherein the determining comprises determining a difference between a line of sight to the first coordinates and a line of sight to the calibration coordinates as the difference angle $\theta$.

2. The method of claim 1, further comprising:

   calculating (424) an observation time t using the ship image; and

calculating (442) an observation time τ using the ship identification information,

wherein the performing of the time synchronization comprises performing the time synchronization by moving the second coordinates by a time difference between the observation times t and τ.

3. The method of claim 1, wherein the correcting comprises:

performing time synchronization for the second coordinates based on the first coordinates; and correcting the misalignment value of the image sensor (205) by adjusting a viewing direction of the image sensor based on the time synchronization.

4. A device for correcting image sensor misalignment, wherein the image sensor is mounted on a satellite, the device comprising:

an acquisition unit (210) configured to acquire a ship image from an image sensor (205) and acquire ship identification information from an automatic identification system ,AIS; a calculation unit (230) configured to calculate first coordinates of the ship using the ship image and to calculate second coordinates of the ship using the ship identification information; and a correction unit (220) configured to correct a misalignment value of the image sensor using the first coordinates of the ship calculated from the ship image and the second coordinates of the ship calculated from the ship identification information, wherein the correction unit (220) is configured to perform time synchronization for the second coordinates based on the first coordinates and determine a difference angle θ formed by calibration coordinates calculated according to the time synchronization and the first coordinates as a misalignment value of the image sensor, wherein the correction unit (220) is configured to determine a difference between a line of sight to the first coordinates and a line of sight to the calibration coordinates as the difference angle θ.

5. The device of claim 4, further comprising:

a calculation unit (230) configured to calculate an observation time t using the ship image and calculate an observation time τ using the ship identification information, wherein the correction unit (220) is configured to perform the time synchronization by moving the second coordinates by a time difference between the observation times t and τ.

6. The device of claim 4, wherein the correction unit (220) is configured to perform time synchronization for the second coordinates based on the first coordinates and correct the misalignment value of the image sensor (205) by adjusting a viewing direction of the image sensor based on the time synchronization.

**Patentansprüche**

1. Verfahren zum Korrigieren von Bildsensorausrichtungsfehler, wobei der Bildsensor auf einem Satelliten montiert ist, das Verfahren umfassend:

Erfassen (420, 510) eines Schiffsbilds von einem Bildsensor (205); Berechnen (422) erster Koordinaten des Schiffs anhand des Schiffsbilds; Erfassen (440, 520) von Schiffsidentifizierungsinformationen von einem automatischen Identifizierungssystem (AIS); Berechnen (444) zweiter Koordinaten des Schiffs unter Verwendung der Schiffsidentifizierungsinformationen; Durchführen von Zeitsynchronisation für die zweiten Koordinaten basierend auf den ersten Koordinaten; Korrigieren (460, 540) eines Ausrichtungsfehlerwerts des Bildsensors (205) unter Verwendung der ersten Koordinaten des Schiffs, die anhand des Schiffsbilds berechnet werden, und der zweiten Koordinaten des Schiffs, die anhand der Schiffsidentifizierungsinformationen berechnet werden; und Bestimmen eines Differenzwinkels θ, der durch gemäß der Zeitsynchronisation berechnete Kalibrierungskoordinaten und die ersten Koordinaten gebildet wird, als einen Ausrichtungsfehlerwert des Bildsensors, wobei das Bestimmen ein Bestimmen einer Differenz zwischen einer Sichtlinie zu den ersten Koordinaten und einer Sichtlinie zu den Kalibrierungskoordinaten als den Differenzwinkel θ umfasst.

2. Verfahren nach Anspruch 1, ferner umfassend:

Berechnen (424) einer Beobachtungszeit t unter Verwendung des Schiffsbilds; und Berechnen (442) einer Beobachtungszeit τ unter Verwendung der Schiffsidentifizierungsinformation, wobei das Durchführen der Zeitsynchronisation ein Durchführen der Zeitsynchronisation durch Verschieben der zweiten Koordinaten um eine Zeitdifferenz zwischen den Beobachtungszeiten t und τ umfasst.

3. Verfahren nach Anspruch 1, wobei das Korrigieren Folgendes umfasst:

Durchführen von Zeitsynchronisation für die zweiten Koordinaten basierend auf den ersten Koordinaten; und
Korrigieren des Ausrichtungsfehlerwerts des Bildsensors (205) durch Einstellen einer Blickrichtung des Bildsensors basierend auf der Zeitsynchronisation.

4. Vorrichtung zum Korrigieren von Bildsensorausrichtungsfehler, wobei der Bildsensor auf einem Satelliten montiert ist, die Vorrichtung umfassend:

eine Erfassungseinheit (210), die konfiguriert ist, um ein Schiffsbild von einem Bildsensor (205) zu erfassen und Schiffsidentifizierungsinformationen von einem automatischen Identifizierungssystem (AIS) zu erfassen;
eine Berechnungseinheit (230), die konfiguriert ist, um erste Koordinaten des Schiffs unter Verwendung des Schiffsbilds zu berechnen und zweite Koordinaten des Schiffs unter Verwendung der Schiffsidentifizierungsinformationen zu berechnen; und
eine Korrektureinheit (220), die konfiguriert ist, um einen Ausrichtungsfehlerwert des Bildsensors unter Verwendung der ersten Koordinaten des Schiffs, die anhand des Schiffsbilds berechnet werden, und der zweiten Koordinaten des Schiffs, die anhand der Schiffsidentifizierungsinformationen berechnet werden, zu korrigieren, wobei die Korrektureinheit (220) konfiguriert ist, um eine Zeitsynchronisation für die zweiten Koordinaten basierend auf den ersten Koordinaten durchzuführen und einen Differenzwinkel θ, der durch Kalibrierungskoordinaten, die gemäß der Zeitsynchronisation berechnet werden, und die ersten Koordinaten gebildet wird, als einen Ausrichtungsfehlerwert des Bildsensors zu bestimmen, wobei die Korrektureinheit (220) konfiguriert ist, um eine Differenz zwischen einer Sichtlinie zu den ersten Koordinaten und einer Sichtlinie zu den Kalibrierungskoordinaten als den Differenzwinkel θ zu bestimmen.

5. Vorrichtung nach Anspruch 4, ferner umfassend:

eine Berechnungseinheit (230), die konfiguriert ist, um eine Beobachtungszeit t unter Verwendung des Schiffsbilds zu berechnen und eine Beobachtungszeit τ unter Verwendung der Schiffsidentifizierungsinformationen zu berechnen,
wobei die Korrektureinheit (220) konfiguriert ist, um die Zeitsynchronisation durch Verschieben der zweiten Koordinaten um eine Zeitdifferenz zwischen den Beobachtungszeiten t und τ durchzuführen.

6. Vorrichtung nach Anspruch 4, wobei die Korrektureinheit (220) konfiguriert ist, um eine Zeitsynchronisation für die zweiten Koordinaten basierend auf den ersten Koordinaten durchzuführen und den Ausrichtungsfehlerwert des Bildsensors (205) zu korrigieren, indem sie eine Blickrichtung des Bildsensors basierend auf der Zeitsynchronisation einstellt.

**Revendications**

1. Procédé de correction de désalignement de capteur d'image, dans lequel le capteur d'image est monté sur un satellite, le procédé comprenant :

l'acquisition (420, 510) d'une image de navire à partir d'un capteur d'image (205) ;
le calcul (422) de premières coordonnées du navire à l'aide de l'image du navire ;
l'acquisition (440, 520) d'informations d'identification de navire à partir d'un système d'identification automatique, AIS ;
le calcul (444) de secondes coordonnées du navire à l'aide des informations d'identification du navire ;
la réalisation d'une synchronisation temporelle des secondes coordonnées sur la base des premières coordonnées ;
la correction (460, 540) d'une valeur de désalignement du capteur d'image (205) en utilisant les premières coordonnées du navire calculées à partir de l'image du navire et les secondes coordonnées du navire calculées à partir des informations d'identification du navire ; et
la détermination d'un angle de différence θ formé par les coordonnées d'étalonnage calculées en fonction de la synchronisation temporelle et les premières coordonnées comme une valeur de désalignement du capteur d'image, dans lequel la détermination comprend la détermination d'une différence entre une ligne de visée vers les premières coordonnées et une ligne de visée vers les coordonnées d'étalonnage comme l'angle de différence θ.

2. Procédé selon la revendication 1, comprenant en outre :

le calcul (424) d'un temps d'observation t à l'aide de l'image du navire ; et
le calcul (442) d'un temps d'observation τ à l'aide des informations d'identification du navire, dans lequel l'exécution de la synchronisation temporelle comprend la réalisation de la synchronisation temporelle en déplaçant les secondes coordonnées d'une différence de temps entre les temps d'observation t et τ.

3. Procédé selon la revendication 1, dans lequel la correction comprend :

la réalisation d'une synchronisation temporelle pour les secondes coordonnées sur la base des premières coordonnées ; et
la correction de la valeur de désalignement du capteur d'image (205) en ajustant une direction de visée du capteur d'image sur la base de la synchronisation temporelle.

4. Dispositif de correction du désalignement de capteur d'image, dans lequel le capteur d'image est monté sur un satellite, le dispositif comprenant :

une unité d'acquisition (210) configurée pour acquérir une image de navire à partir d'un capteur d'image (205) et acquérir des informations d'identification de navire à partir d'un système d'identification automatique, AIS ;
une unité de calcul (230) configurée pour calculer les premières coordonnées du navire à l'aide de l'image du navire et pour calculer les secondes coordonnées du navire à l'aide des informations d'identification du navire ; et
une unité de correction (220) configurée pour corriger une valeur de désalignement du capteur d'image en utilisant les premières coordonnées du navire calculées à partir de l'image du navire et les secondes coordonnées du navire calculées à partir des informations d'identification du navire, dans lequel l'unité de correction (220) est configurée pour effectuer une synchronisation temporelle pour les secondes coordonnées sur la base des premières coordonnées et déterminer un angle de différence θ formé par les coordonnées d'étalonnage calculées en fonction de la synchronisation temporelle et les premières coordonnées comme une valeur de désalignement du capteur d'image, dans lequel l'unité de correction (220) est configurée pour déterminer une différence entre une ligne de visée vers les premières coordonnées et une ligne de visée vers les coordonnées d'étalonnage comme l'angle de différence θ.

5. Dispositif selon la revendication 4, comprenant en outre :

une unité de calcul (230) configurée pour calculer un temps d'observation t à l'aide de l'image du navire et calculer un temps d'observation τ à l'aide des informations d'identification du navire, dans lequel l'unité de correction (220) est configurée pour réaliser la synchronisation temporelle en déplaçant les secondes coordonnées d'une différence de temps entre les temps d'observation t et τ.

6. Dispositif selon la revendication 4, dans lequel l'unité de correction (220) est configurée pour effectuer une synchronisation temporelle pour les secondes coordonnées sur la base des premières coordonnées et corriger la valeur de désalignement du capteur d'image (205) en ajustant une direction de visée du capteur d'image sur la base de la synchronisation temporelle.

<Observation data calculation module>

| Image sensor | → | Acquire image of reference target | → | Calculate image-based reference target coordinates | → | Calculate image sensor mounting misalignment |

110 · 120 · 130 · 160

<Reference data acquisition module>

Reference target DB · 140 → Acquire DB-based reference target coordinates · 150

Correct mounting angle of image sensor · 170

FIG. 1

Device for correcting image sensor misalignment 200

FIG. 2

○ AIS-based ship coordinates (second coordinates)
□ Image-based ship coordinates (first coordinates)
● AIS-based calibration coordinates

FIG. 3A

FIG. 3B

<Calculation of observation data>

FIG. 4

```
        ┌─────────────┐
        │    Start    │
        └──────┬──────┘
               │
               ▼
┌──────────────────────────────────────────────┐
│      Acquire ship image from image sensor      │──── 510
└──────────────────────────────────────────────┘
               │
               ▼
┌──────────────────────────────────────────────┐
│  Acquire ship identification information from AIS │──── 520
└──────────────────────────────────────────────┘
               │
               ▼
┌──────────────────────────────────────────────┐
│  Calculate first coordinates of ship from ship image and calculate  │──── 530
│  second coordinates of ship from ship identification information     │
└──────────────────────────────────────────────┘
               │
               ▼
┌──────────────────────────────────────────────┐
│  Correct misalignment value of image sensor, using first coordinates and  │──── 540
│                    second coordinates                    │
└──────────────────────────────────────────────┘
               │
               ▼
        ┌─────────────┐
        │     End     │
        └─────────────┘
```

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015036832 A

- CN 104535066 A

**Non-patent literature cited in the description**

- Tracking a Vessel by Combining Video and AIS Reports. **JINHAI CHEN et al.** FUTURE GENERATION COMMUNICATION AND NETWORKING, 2008. FGCN '08. SECOND INTERNATIONAL CONFERENCE ON. IEEE, 13 December 2008, 374-378

- **YAO LIBO et al.** A Novel Ship-Tracking Method for GF-4 Satellite Sequential Images. *SENSORS*, 22 June 2018, vol. 18 (7), 2007